(19) Europäisches Patentamt
European Patent Office
Office européen des brevets

(11) Publication number: 0 107 104 B1

# (12) EUROPEAN PATENT SPECIFICATION

(45) Date of publication of patent specification: 31.05.89

(51) Int. Cl.[4]: B 29 C 45/02

(21) Application number: 83109779.5

(22) Date of filing: 29.09.83

## (54) A process for fabricating thermoset resin articles.

(30) Priority: 30.09.82 US 430366

(43) Date of publication of application:
02.05.84 Bulletin 84/18

(45) Publication of the grant of the patent:
31.05.89 Bulletin 89/22

(84) Designated Contracting States:
AT BE CH DE FR GB IT LI LU NL SE

(56) References cited:
DD-A- 43 934
DD-A- 64 881
DD-A- 149 339
DE-A-1 069 374
US-A-2 921 925
US-A-3 169 945
US-A-3 777 000

(73) Proprietor: UNION CARBIDE CORPORATION
39 Old Ridgebury Road
Danbury Connecticut 06817 (US)

(72) Inventor: Angell, Richard Gordon
691 Carlene Drive
Somerville New Jersey 08872 (US)
Inventor: Hobbs, Kenneth Elton
28 Baker Drive
Helmetta New Jersey 08828 (US)
Inventor: Konrad, John Martin
524 Howard Avenue
Middlesex New Jersey 08846 (US)

(74) Representative: Weinhold, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 107 104 B1

**Description**

The present invention relates to a process for fabricating thermoset resin articles which comprises:

(a) providing in an accumulator zone, a liquid body of an epoxide containing organic material which is curable upon heating to a thermoset resin composition, the viscosity of the liquid body being maintained essentially constant in the accumulator zone by keeping its temperature below that at which curing of the organic material is substantial;

(b) providing a heated mold having a cavity;

(c) placing at least a portion of the organic material in the mold to fill the cavity in the mold;

(d) initiating the curing of the organic material by subjecting it to a temperature in the mold above the temperature at which it begins to cure;

(e) maintaining pressure on the curing material;

(f) injecting additional organic material into the mold cavity during the curing of the organic material; and

(g) opening the mold and removing the article therefrom,

Epoxy resin formulations have been used in a variety of applications. Particularly, epoxy resins have inherently good electrical and mechanical properties. Therefore, epoxy resin formulations are useful in producing electrical parts such as bushings, insulators, and the like. Several techniques have been used to fabricate such electrical parts. For example, in U.S. Patent 3,777,000 which discloses a process of the type above there is described a process for producing a thick walled cured plastic molding. In said process, a preheated highly reactive liquid casting resin composition, such as an epoxide resin composition, which is capable of setting within a period of three to sixty minutes is poured into a preheated mold substantially without the application of pressure so as to substantially fill the mold. The temperature of the mold, is stated in said patent, to be sufficient to initiate curing of the resin composition. The temperature of the resin composition being at least 10 percent below the temperature of the mold. It is further stated in said patent that the specified difference between the temperature of the mold and the pouring temperature of the casting resin composition is capable of ensuring that relatively only minor temperature gradients will arise in different parts of the casting during the process of gelling and setting. The patent then states that with the described casting method, the times the casting remain in the mold are substantially shorter and the risk of cavity formation is eliminated. Also, it is stated that the mechanical properties of castings produced in this way are less liable to fluctuate due to the lower temperature gradients in the casting composition at different points inside the mold during curing.

However, in the US-patent 3,777,000 there is no suggestion that the mold be evacuated, the mold used according to the known process being provided with a venting riser. Furthermore, it is not described that the organic material should be forced into the mold under a pressure of 2 to 40 atmospheres. It is stated that the organic material is poured into a pre-heated mold to substantially fill the mold. The casting technique described in said patent requires long cure times in the mold and long post cure. Further, there is the danger that the finished articles contain air voids and other imperfections, especially if the total cycle time should be kept as short as possible.

The object of the present invention is to provide a process for producing a fabricated thermoset resin article in which the total cycle time can be considerably reduced compared to the known processes. It should be possible to use higher mold temperatures for the injection molding process. Despite of the use of very short curing time, air voids and other imperfections in the finished article should be eliminated.

The present invention seeks to overcome the aforesaid drawbacks or potential drawbacks and accordingly provides a process of the kind stated which is characterized in that the mold is closed, substantially all air is removed from the cavity of the mold before the organic material is placed in the mold, and in step (c) the organic material is injected into the mold under a pressure of 2 to 40 atmospheres.

In this way molded articles can be produced at higher temperatures, with relatively short cure times in the mold, as well as relatively short post cure times. Furthermore, the final articles are cured in a uniform way.

In the present process, as the first step, a liquid body of an epoxide containing organic material (composition) which forms the thermoset resin matrix of the molded article is provided in an accumulator zone. This epoxide containing organic material is preferably the epoxide resin containing composition described in the copending European Patent Application with the publication No. 0 015 488, filed in the name of O. K. Spurr, titled Curable Epoxy Resin Containing Moulded Compositions, and filed on the same day as this application.

The curable epoxy resin containing compositions described in said European Patent Application comprises an epoxide resin, a polyol, a hardener, and a particular catalyst.

The catalysts which are used in said composition are characterized by the performance of the formulation containing 60 percent by weight of the total formulation of aluminum trihydrate filler in which they are incorporated. The formulation containing the catalyst has a peak exotherm of 210°C or less, a time to peak exotherm of 10.5 minutes or less in a mold at 150°C, and the time for the viscosity of the formulation to reach 3000 centipoise at 80°C is 30 minutes or greater or 60 minutes or greater for the formulation to reach a viscosity of 20,000 centipoise at 80°C. The catalysts suitable for use include one or more amines such as pyridine-n-oxide, 1,4-diazabicyclo [2.2.2] octane, 2-methyl-imidazole, 2-phenyl-imidazole, 1-vinyl-2-methyl imidazole, 1-acetyl quaternary ammonium or phosphonium compounds such as n-propyl triphenyl phosphonium bromide, benzyl triphenyl phosphonium bromide and chloride, n-heptyl triphenyl phosphonium bromide, ethyl triphenyl phosphonium bromide and iodie, and n-hexyl triphenyl phosphonium bromide; diamines, such as bis(dimethylamino ethyl) ether, and the like.

These catalysts are used in amounts of from about 0.05 to about 10 parts by weight per 100 parts by weight of resin.

If the catalyst is a solid, it may be dissolved in a suitable solvent such as an alcohol or polyol. These include 2 ethyl 1,3-hexanediol, polycaprolactone polyols, diethylene glycol, triethylene glycol, methyl cellosolve, butyl cellosolve, and the like.

The epoxide resins contain more than one 1,2-epoxide group per average molecule. The cycloaliphatic epoxides are preferred.

Suitable cycloaliphatic epoxides are those having an average of more than one vicinal epoxy group per molecule. The epoxy groups can be terminal epoxy groups or internal expoxy groups as exemplified by the cycloaliphatic epoxides which are subsequently described. Particularly desirable cycloaliphatic epoxides are the cyclohexane diepoxides, that is epoxides having at least one cyclohexane ring to which is attached at least one vicinal epoxy group.

Illustrative of suitable cycloaliphatic epoxides are the following:

FORMULA I

Diepoxides of cycloalipatic esters of dicarboxylic acids having the formula:

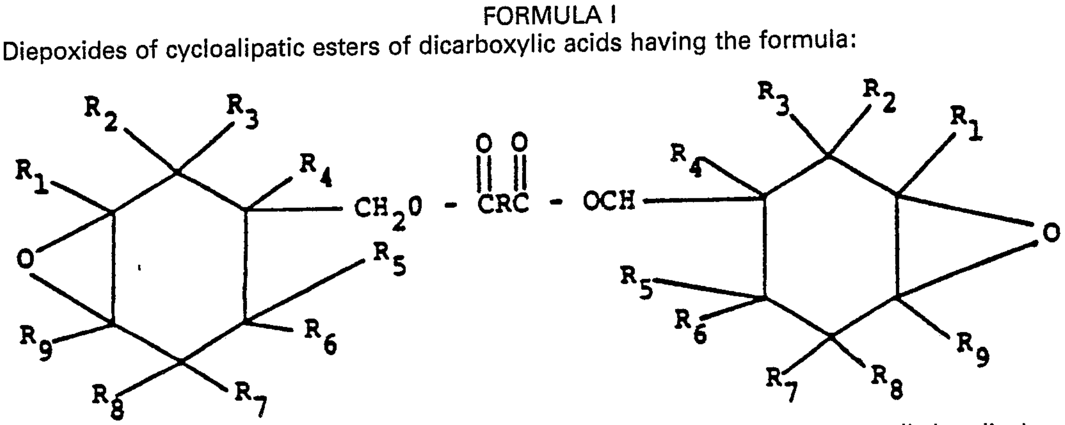

wherein $R_1$ through $R_9$, which can be the same or different are hydrogen or alkyl radicals generally containing one to nine carbon atoms inclusive and preferably containing one to three carbon atoms inclusive as for example methyl, ethyl, n-propyl, n-butyl, n-hexyl, 2-ethylhexyl, n-octyl, n-nonyl and the like; R is a valence bond or a divalent hydrocarbon radical generally containing one to nine carbon atoms inclusive and preferably containing four to six carbon atoms inclusive, as for example, alkylene radicals, such as trimethylene, tetramethylene, pentamethylene, hexamethylene, 2-ethylhexamethylene, octamethylene, nonamethylene, and the like; cycloaliphatic radicals, such as 1,4-cyclohexane, 1,3-cyclohexane, 1,2-cyclohexane, and the like.

Particularly desirable epoxides, falling within the scope of Formula I, are those wherein $R_1$ through $R_9$ are hydrogen and R is alkylene containing four to six carbon atoms.

Among specific diepoxides of cycloaliphatic esters of dicarboxylic acids are the following:

bis(3,4-epoxycyclohexylmethyl)oxalate,
bis(3,4-epoxycyclohexylmethyl)adipate,
bis(3,4-epoxy-6-methylcyclohexylmethyl)adipate,
bis(3,4-epoxycyclohexylmethyl)pimelate,
and the like. Other suitable compounds are described in U.S. Pat. No. 2,750,395 to B. Phillips et al.

FORMULA II

A 3,4-epoxycyclohexylmethyl 3,4-epoxycyclohexane carboxylate having the formula:

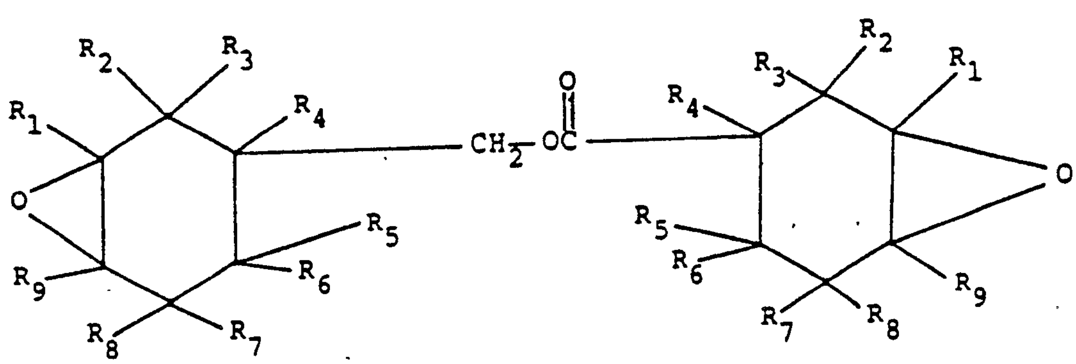

wherein $R_1$ through $R_9$ which can be the same or different are as defined for $R_1$ in formula I. Particularly desirable compounds are those wherein $R_1$ through $R_9$ are hydrogen.

Among specific compounds falling within the scope of Formula II are the following: 3,4-expoxy-cyclohexylmethyl, 3,4-epoxycyclohexanecarboxylate, 3,4-epoxy-1-methylcyclohexylmethyl, 3,4-epoxy-1-methylcyclohexylmethyl, 3,4-epoxy-1-methylcyclohexanecarboxylate, 6-methyl-3,4-epoxycyclohexylmethyl, 6-methyl-3,4-epoxycyclohexanecarboxylate, 3,4-epoxy-3-methylcyclohexylmethyl, 3,4-epoxy-3-methylcyclohexanecarboxylate, 3,4-epoxy-5-methylcyclohexylmethyl, 3,4-epoxy-5-methylcyclohexanecarboxylate. Other suitable compounds are described in U.S. Pat. No. 2,890,194 to B. Phillips et al.

FORMULA III

Diepoxides having the formula:

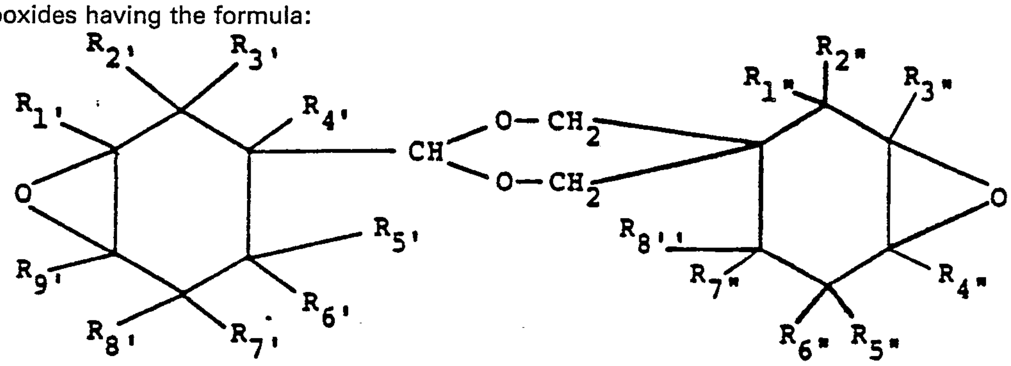

wherein the R single and double primes, which can be the same or different, are monovalent substitutents such as hydrogen, halogen, i.e., chlorine, bromine, iodine or fluorine, or monovalent hydrocarbon radicals, or radicals as further defined in U.S. Pat. No. 3,318,822 to Hans Batzer et al. Particularly desirable compounds are those wherein all the R's are hydrogen.

Other suitable cycloaliphatic epoxides are the following:

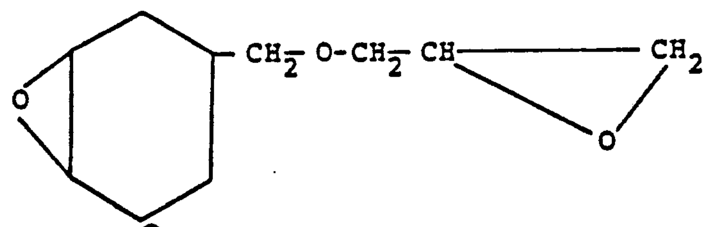

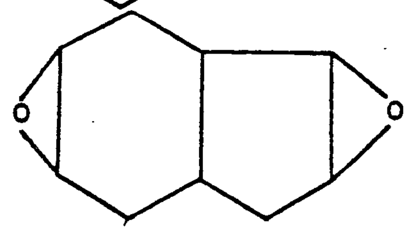

and the like.

The preferred cycloaliphatic epoxides are the following:

3,4-Epoxycyclohexylmethyl-3,4-Epoxycyclohexanecarboxylate

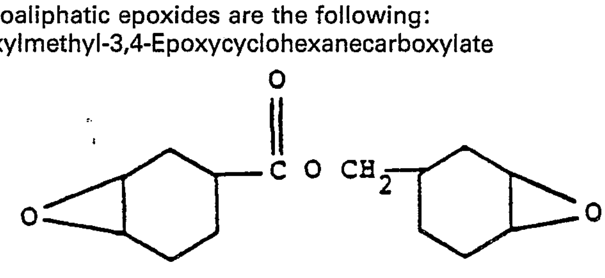

Bis-(3,4-Epoxycyclohexylmethyl) Adipate

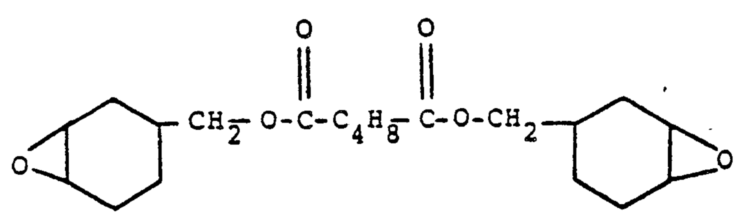

2-(3,4-Epoxycyclohexyl-5,5-spiro-3,4-epoxy) cyclohexane-meta-dioxane

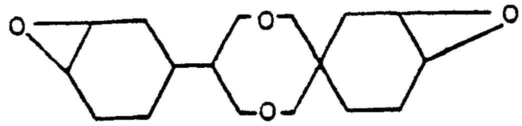

vinyl cyclohexane Dioxide

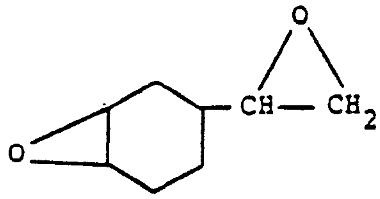

or mixtures thereof.

Epoxides with six membered ring structures may also be used, such as diglycidyl esters of phthalic acid, partially hydrogenated phthalic acid or fully hydrogenated phthalic acid. Diglycidyl esters of hexahydrophthalic acids being preferred.

Mixtures of epoxide resins may also be usaed.

The glycols suitable for use in this invention include polycaprolactone polyols as well as alkylene oxide adducts of polyhydroxyalkanes.

Illustrative of the polycaprolactone polyols that can be used one can mention the reaction products of a polyhydroxyl compound having from 2 to 6 hdyroxyl groups with caprolactone. The manner in which these polycaprolactone polyol compositions are produced is shown in, for example, U.S. 3,169,945 and many such compositions are commercially available. In the following table there are listed illustrative polycaprolactone polyols. The first column lists the organic functional initiator that is reacted with caprolactone and the average molecular weight of the polycaprolactone polyol is shown in the second column.

Knowing the molecular weights of the initiator and of the polycaprolactone polyol one can readily determine the average number of molecules of caprolactone (CPL Units) that reacted to produce the compound; this figure is shown in the third column.

POLYCAPROLACTONE POLYOLS

| Initiator | | Average MW of polyol | Average No. of CPL Units in molecules |
|---|---|---|---|
| 1 | Ethylene glycol | 290 | 2 |
| 2 | Ethylene glycol | 803 | 6.5 |
| 3 | Ethylene glycol | 2,114 | 18 |
| 4 | Propylene glycol | 874 | 7 |
| 5 | Octylene glycol | 602 | 4 |
| 6 | Decalence glycol | 801 | 5.5 |
| 7 | Diethylene glycol | 527 | 3.7 |
| 8 | Diethylene glycol | 847 | 6.5 |
| 9 | Diethylene glycol | 1,246 | 10 |
| 10 | Diethylene glycol | 1,998 | 16.6 |
| 11 | Diethylene glycol | 3,526 | 30 |
| 12 | Triethylene glycol | 754 | 5.3 |
| 13 | Polyethylene glycol (MW 200)* | 713 | 4.5 |
| 14 | Polyethylene glycol (MW 600)* | 1,396 | 7 |
| 15 | Polyethylene glycol (MW 1500)* | 2,868 | 12 |
| 16 | 1,2-Propylene glycol | 646 | 5 |
| 17 | 1,3-Propylene glycol | 988 | 8 |
| 18 | Dipropylene glycol | 476 | 3 |
| 19 | Polypropylene glycol (MW 425)* | 824 | 3.6 |
| 20 | Polypropylene glycol (MW 1000)* | 1,684 | 6 |
| 21 | Polypropylene glycol (MW 2000)* | 2,456 | 4 |
| 22 | Hexylene glycol | 916 | 7 |
| 23 | 2-Ethyl-1,3-hexanediol | 602 | 4 |
| 24 | 1,5-Pentanediol | 446 | 3 |
| 25 | 1,4-Cyclohexanediol | 629 | 4.5 |

POLYCAPROLACTONE POLYOLS

| Initiator | | Average MW of polyol | Average No. of CPL Units in molecules |
|---|---|---|---|
| 26 | 1,3-Bis (hydroxyethyl)-benzene | 736 | 5 |
| 27 | Glycerol | 548 | 4 |
| 28 | 1,2,6-Hexanetriol | 476 | 3 |
| 29 | Trimethylolpropane | 590 | 4 |
| 30 | Trimethylolpropane | 761 | 5.4 |
| 31 | Trimethylolpropane | 1,103 | 8.5 |
| 32 | Triethanolamine | 890 | 6.5 |
| 33 | Erythritol | 920 | 7 |
| 34 | Pentaerythritol | 1,219 | 9.5 |

* = Average molecular weight of glycol.

The structures of the compounds in the above tabulation are obvious to one skilled in the art based on the information given. The structure of compound No. 7 is:

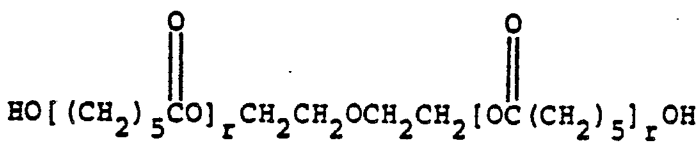

wherein the variable r is an integer, the sum of r + r has an average value of 3.7 and the average molecular weight is 527. The structure of compound No. 20 is:

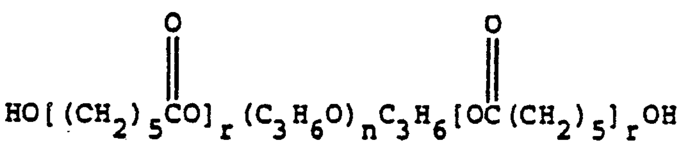

wherein the sum of r + r has an average value of 6 and the average molecular weight is 1,684. This explanation makes explicit the structural formulas of compounds 1 to 34 set forth above.

Illustrative alkylene oxide adducts of polyhydroxyalkanes include, among others, the alkylene oxide adducts of ethylene glycol, propylene glycol, 1,3-dihydroxypropane, 1,3-dihdyroxybutane, 1,4-dihydroxybutane, 1,4-1,5- and 1,6-dihydroxyhexane, 1,2-, 1,3-, 1,4-, 1,6-, and 1,8-dihydroxyoctane, 1,10-dihydroxydecane, glycerol, 1,2,4,-trihydroxybutane, 1,2,6-trihydroxyhexane, 1,1,1,-trimethylolethane, 1,1,1,-trimethylolpropane, pentaerythritol, caprolactone, polycaprolactone, xylitol, arabitol, sorbitol, mannitol, and the like; preferably the adducts of ethylene oxide, propylene oxide, epoxybutane, or mixtures thereof. A preferred class of alkylene oxide adducts of polyhydroxyalkanes are the ethylene oxide, propylene oxide, or mixtures thereof, adducts or trihydroxyalkanes.

The preferred alkylene oxide adducts of polyhydroxyalkanes are of the following formula:

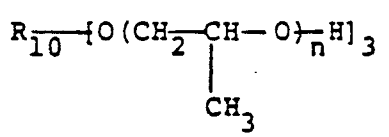

wherein $R_{10}$ is alkane of 3 to 10 carbon atoms, preferably 3 carbon atoms, and n is an integer of from about 4 to about 25.

It is customary to add appropriate hardeners to epoxide compositions to effect cure. Among suitable hardeners are the following:

1. polybasic acids having at least 2 carboxylic acid groups per molecule.
2. anhydrides of acids having at least 2 carboxylic acid groups per molecule.

Illustrative of suitable polybasic acids are the polycarboxylic acids of the formula:

$$HOOC{-}(CH_2)_f{-}COOH$$

wherein f is an integer generally having a value of from 1 to 20 inclusive, as for example, malonic, glutaric, adipic, pimelic, suberic, azelaic, sebacic and the like. Other examples of suitable acids are phthalic acid,

isophthalic acid, terephthalic acid, hexahydrophthalic acid, and the like. Further acids are enumerated in U.S. Pat. No. 2,918,444 to B. Phillips et al.

Among other suitable polybasic acids, having at least two carboxylic groups per molecule, can be noted the following: tricarballylic acid, trimellitic and the like. Other such suitable polybasic acids, including polyesters thereof, are described in U.S. Pat. No. 2,921,925 to B. Phillips et al.

Suitable anhydrides are the anhydrides of the acids listed above.

For purposes of stoichiometric calculations with respect to acids, one carboxyl group is deemed to react with one epoxy group; with respect to anhydrides, one anhydride group is deemed to react with one epoxy group.

Preferred hardeners include methyltetrahydrophthalic anhydride, hexahydrophthalic anhydride and methylhexahydrophthalic anhydride.

Other additives can be added to the compositions as is well known in the epoxy art. These additives include the following: modifiers such as dimer acid (made from unsaturated $C_{18}$ fatty acids and is a mixture of 3 percent mono basic acids, 75 percent dimer acid and 22 percent trimer acid and sold under the name of Empol 1022 by Emery Industries), a carboxyl terminated butadiene acrylonitrile (80—20) random copolymer having a molecular weight of about 3300; fillers such as clay, silica, aluminum trihydride, or mixtures thereof which may be coated with, for example, silanes, which fillers may be added in amounts of up to about 60 percent; pigments such as carbon black; mold release agents, and the like.

The compositions are prepared by simply mixing the epoxide, glycol, catalyst hardener and other ingredients at room or higher temperatures in a suitable container. Also, the epoxide and glycol may be mixed in one container and the hardener, catalyst and/or accelerator in another container and these two mixed.

The composition is then heated in order to effect its cure. The temperature to which the composition is heated to effect cure will, of course, vary and depend, in part upon the exact formulations of the compositions. Generally, temperatures in the range of about 100°C to about 200°C are used for a period of time ranging from about 1 about 6 hours.

The organic material is maintained in the accumulator zone (which may be more than one accumulator zone) at a temperature below the temperature which initiates substantial curing of the material in order to maintain its viscosity. Thereafter, the thermosettable organic material is injected into the heated mold to fill the mold cavity. The thermosettable organic material is heated in the mold to a temperature which is above the temperature at which cure of the thermosettable organic materials is initiated. Once the material cures, the mold is open and the molded article is removed therefrom.

It is necessary to employ a sturdy mold in the process of the invention, such as one made of metal which possesses the heating capacity required for the process of this invention. A desirable mold for use in this invention is a heatable matched metal die mold. A preferred mold is described in the copending European Patent Application with the publication No. 0 107 103, filed in the names of R. Angell et al, titled A Mold For Producing Elongated Articles, and filed on the same date as this application.

This mold comprises mold members each having an inner and outer surface for movement toward and away from one another along a mold axis, the inner surfaces of said members cooperating to present a cavity therebetween for receiving thermosetting organic material, the inner surface of one of the mold members carrying two sealing means the length of the inner surface and at the outer portion of such surface, said sealing means essentially parallel to one another, a top and bottom means each containing sealing means on the inner surface which communicate with the sealing means in the inner mold surface to form a seal around the cavity, when the mold members are closed, and a source of organic material communicating with the cavity.

The air the mold cavity is evacuated prior to injecting the epoxide containing organic material to remove essentially all of the air from the mold cavity. This allows the organic material to be added rapidly to the mold cavity without trapping air at the mold/resin interface. The injection pressure, will vary from about 2 to about 40 atmospheres during the molding operation.

It is important in the practice of this invention to prevent a degree of curing of the epoxide containing organic material before it is introduced into the mold which would significantly increase its viscosity. Premature curing of the organic material before it is introduced into the mold, could raise its viscosity undesirably high.

The mold employed herein is a heated mold which means that it has the capacity of being heated during the molding step. Heating is provided by heating jackets on the mold which are heated either by hot gases or hot liquids, and/or electric heaters can be inserted in the mold structure. Any one of these techniques are convenient and quite suitable in the practice of this invention. However, the mold can be cooled after the product is made and before it is removed from the mold. In this case, the mold is reheated when it is closed and prior to the next injection of the thermosettable liquid. There is no economic advantage in going through a cycle of mold heating and cooling. Thus, the preferred method of operation of the present process is to maintain the mold at a constant temperature throughout the various molding cycles. The temperature at which the mold is maintained is dependent upon the temperature at which the cure of the thermosettable organic materials supplied to the mold is initiated to produce a thermoset resin composition. The initiation temperature is the temperature at which the components of the thermosettable

organic materials inter-react to effect an exothermic reaction which cures the materials to a thermoset resin.

The mold temperature which is sufficient to initiate reaction resulting in a thermoset resin is dependent upon the particular thermoset organic materials. These materials undergo curing at temperatures of from about 100°C. to about 200°C. In considering the exothermic temperature of the reaction, it is desirable to utilize a mold temperature which nominally exceeds the initiation temperature by at least 10—20°C, thus, ensuring a rapid initiation and a quick increase in the exotherm to produce a cured product in a minimum amount of time. Moreover, catalysts, initiators, etc., are generally added to the thermosettable materials. The type of catalyst or initiator, as well as any promoter or activator supplied therewith, will greatly determine mold temperature.

The resin composition undergoes shrinking during cure. Therefore after the resin in the mold has shrunken additional resin is injected into the mold at a pressure of from about 2 to about 30 atmospheres.

In order to facilitate the understanding of the aforementioned process, reference is made to the Figures herein which characterizes specific embodiments of the process and apparatus for practicing the process. It is not intended that the scope of the process as hereinabove defined be restricted by the specific materials and equipment which are characterized in the Figures since they are intended for illustration purposes only.

Figure I is a schematic diagram of the process of this invention. Pressure tank 1 contains the resinous component 13. Air is supplied via line 2 through valve 3 to supply pressure on the resinous component 13. The pressure is measured by gage 4. The resin is then injected under pressure through line 6 into mold 11. Valves 5 and 8 control the resin flow. Prior to injecting the resin into the mold, the mold cavity is evacuated through line 7. Valve 9 controls the vacuum. The mold 11 consists of two halves 14 and 14' which are clamped together. Valve plate 10 is fitted with valves 8 and 9. Between the two halves of the mold is a core pin (not shown) which is pulled out by core pull 12.

Figure II is a schematic diagram of another embodiment of the process of this invention. Pressure tanks 15 and 15' contain components of an epoxy resin containing formulation 16 and 17. Pumps 19 and 20 pump the components from tanks 15 and 15' via lines 32, 33, 34 and 35, respectively, to static mixer 21. If used, the pressure is measured by gages 18 and 18', respectively. The components of the two tanks are mixed and then injected under pressure into the mold 36. Valve 22 controls the resin flow. Prior to injecting the resin into the mold, the mold cavity is evacuated through line 24. Valve 23 controls the vacuum. The mold 36 consists of two halves 25 and 26' which are clamped together. Valve plate 26 is fitted with valves 22 and 23. Between the two halves of the mold is a core pin (not shown) which is pulled out by core pull 27.

The process of this invention preferably produces electrical parts, such as bushings.

## Examples

The following Examples serve to give specific illustration of the practice of this invention but they are not intended in any way to act to limit the scope of this invention.

The following designations used in the Examples have the following meanings:

Epoxy I = 3,4-epoxycyclohexyl-3,4-epoxycyclohexane carboxylate.

Epoxy II = diglycidyl ester of hexahydrophthalic acid (Araldite CY 183 obtained from Ciba-Geigy).

HHPA = hexahydrophthalic anhydride.

ATH = aluminum trihydrate.

Polyol I = polypropylene oxide triol having a molecular weight of 710.

Polyol II = polycaprolactone diol having a molecular weight of 10,000.

Polyol III = polypropylene oxide trial having a molecular weight of 5000.

Catalyst I = 1,4-diazabicyclo [2.2.2] octane.

Catalyst II = a sodium salt of hexanetriol in combination with an amine (XU-183 obtained from Ciba-Geigy).

Defoamer = a silicone defoamer (Sag 100 sold by Union Carbide Corporation).

### Example 1

The apparatus as shown in Figure I using a DeVilbriss pressure pot (QU—5092—1) was used to mold an electrical bushing. The materials added to the pressure pot were the following:

80 parts of Epoxy I,
20 parts of Polyol I,
70.4 parts of HHPA,
0.43 parts of Catalyst I,
256 parts of ATH, and
2 drops of Defoamer.

The materials were added at a temperature of about 80°C. The air pressure added to the pot to push the material from the pot to the mold was 6.2 bar (90 psi). The mold was heated to 150°C before the material was injected to accelerate the cure of the material. Two valves were adjacent to the cavity of the mold; one was used to evacuate the air from the cavity, and the other was used to control resin flow to the cavity. After the mold was evacuated and the vacuum valve closed, the resin was introduced to the mold. The resin valve was kept open during the cure cycle to allow additional resin to be added to the cavity to compensate for shrinkage in the curing resin.

After 15 minutes the valve was closed and the mold was opened. An electrical bushing weighing 3873 grams was removed. It had a smooth surface and was free of sink marks and voids (bubbles).

Example 2

A bushing was molded by the procedure of Example 1 except the amount of catalyst was increased from 0.43 parts to 0.86 parts. The time to cure was reduced to 8 minutes and the molded part was similar to that of Example 1.

Example 3

The procedure of Example 1 was repeated to mold a bushing except that the pressure in the resin pot was 5.5 bar (80 psi) instead of 6.2 bar (90 psi). Also, the formulation was the following:

100 parts of Epoxy II,
100 parts of HHPA,
1.5 parts of Catalyst I,
4.5 parts of Polyol II,
309 parts of ATH, and
2 drops of Defoamer

A bushing weighing 4034 grams was removed from the mold in 10 minutes.

Example 4

The procedure of Example 3 was repeated except that 6 parts of Catalyst II was used instead of 1.5 parts of Catalyst I and 4.5 parts of Polyol II. A bushing weighing 4012 grams was removed from the mold after 10 minutes.

Example 5

The procedure of Example 4 was repeated except that the formulation was as follows:
83.33 parts of Epoxy I,
16.67 parts of Polyol I,
83 parts of HHPA
5 parts of Catalyst II,
282 parts of ATH, and
2 drops of Defoamer.
A bushing weighing 3914 grams was removed from the mold after 10 minutes.

Example 6

The procedure of Example 3 was repeated except that the formulation was as follows:
100 parts of Epoxy I,
25.6 parts of Polyol I,
25.6 parts of Polyol III,
104.5 parts of HHPA
1.28 parts of Catalyst I,
1.92 part of Polyol II,
1.92 parts of n-propoxypropanol,
391.2 parts of Silica 325 mesh, (No. 219 obtained from Whitakee, Claib and Daniels), and
2 drops of Defoamer.
A bushing weighing 3982 grams was taken from the mold after 10 minutes.

Example 7

An apparatus as shown in Figure II (two component system) was used to mold tensile bars. The equipment was purchased from Liquid Control Corp. in North Cantan, Ohio as a "posiratio" dispensing system, (serial No. 0558, model No. PR6—3735). The temperature of the equipment was set to keep one side (containing resin) and the other side (containing hardener) at 71°C (160°F). The resin containing side was the following:
83.33 parts of Epoxy I,
16.67 parts of Polyol I,
147.0 parts of ATH, and
2 drops of Defoamer.
The side containing the hardener contained the following:
83.0 parts of HHPA,
0.92 parts of Catalyst I,
1.37 parts of Polyol I,
1.37 parts of n-propoxypropanol
133.0 parts of ATH, and
2 drops of Defoamer.

The machine pumped the components through a 36 element static mixer, through an injection nozzle (at 72°C (160°F)), and into a mold at 149°C (300°F). The mold was gasketed with o-rings and it was evacuated for 30 seconds before the resin was injected. The air pressure on the pump was 40 psi which generated a fluid pressure in the feed lines and the mold of 24.1 bar (350 psi). After 10 minutes in the mold, a part containing three tensile bars and two three inch square plaques was removed.

**Claim**

A process for fabricating thermoset resin articles which process comprises:

(a) providing in an accumulator zone, a liquid body of an epoxide containing organic material which is curable upon heating to a thermoset resin composition, the viscosity of the liquid body being maintained essentially constant in the accumulator zone by keeping its temperature below that at which curing of the organic material is substantial;

(b) providing a heated mold having a cavity;

(c) placing at least a portion of the organic material in the mold to fill the cavity in the mold;

(d) initiating the curing of the organic material by subjecting it to a temperature in the mold above the temperature at which it begins to cure;

(e) maintaining pressure on the curing material;

(f) injecting additional organic material into the mold cavity during the curing of the organic material; and

(g) opening the mold and removing the article therefrom,

characterized in that the mold is closed, substantially all air is removed from the cavity of the mold before the organic material is placed in the mold, and in step (c) the organic material is injected into the mold under a pressure of 2 to 40 atmospheres.

**Patentanspruch**

Verfahren zum Herstellen von Gegenständen aus wärmegehärtetem Kunststoff, welches umfaßt

(a) die Bereitstellung, in einer Akkumulatorzone, eines flüssigen Körpers aus einem epoxidhaltigen organischen Material, das nach Erhitzen zu einer wärmegehärteten Harzzusammensetzung härtbar ist, wobei die Viskosität des flüssigen Körpers in der Akkumulatorzone im wesentlichen konstant gehalten wird, indem man deren Temperatur unter derjenigen hält, bei welcher die Aushärtung des organischen Materials wesentlich ist,

(b) die Bereitstellung einer erhitzten Form mit einem Hohlraum,

(c) das Einbringen mindestens eines Teils des organischen Materials in die Form zum Füllen des Hohlraumes in derselben,

(d) die Einleitung der Aushärtung des organischen Materials, indem man dieses in der Form einer Temperatur oberhalb der Temperatur, bei welcher seine Aushärtung beginnt, aussetzt,

(e) die Aufrechterhaltung von Druck auf das aushärtende Material,

(f) das Einspritzen von zusätzlichem organischen Material in den Form-Hohlraum während der Aushärtung des organischen Materials und

(g) die Öffnung der Form und Entfernung des Gegenstandes aus derselben, dadurch gekennzeichnet, daß die Form geschlossen wird, praktisch die gesamte Luft aus dem Hohlraum der Form entfernt wird, bevor das organische Material in die Form eingeführt wird, und in Stufe (c) das organische Material unter einem Druck von 2 bis 40 at in die Form eingespritzt wird.

**Revendication**

Procédé de fabrication d'articles en résine thermodurcissable, qui consiste:

(a) à introduire dans une zone d'accumulation une masse liquide d'une matière organique contenant un époxyde qui est durcissable sous l'effet de la chaleur en une composition de résine thermodurcie, la viscosité de la masse liquide étant maintenue essentiellement constante dans la zone d'accumulation par le maintien de sa température au-dessous de la température à laquelle la maturation de la matière organique est importante;

(b) à prendre un moule chauffant présentant une cavité;

(c) à charger au moins une portion de la matière organique dans le moule pour en remplir la cavité;

(d) à déclencher la maturation de la matière organique par exposition de cette matière à une température, dans le moule, au-dessus de la température à laquelle elle commence à durcir;

(e) à maintenir sous pression la matière en cours de durcissement;

(f) à injecter une quantité additionelle de matière organique dans la cavité du moule pendant le durcissement de la matière organique; et

(g) à ouvrir le moule et à en retire l'objet, caractérisé en ce que le moule est fermé, la quasi-totalité de l'air est chassée de sa cavité avant que la matière organique n'y soit introduite et, dans l'étape (c), la matière organique est injectée dans le moule sous une pression de 2 à 40 atmosphères.

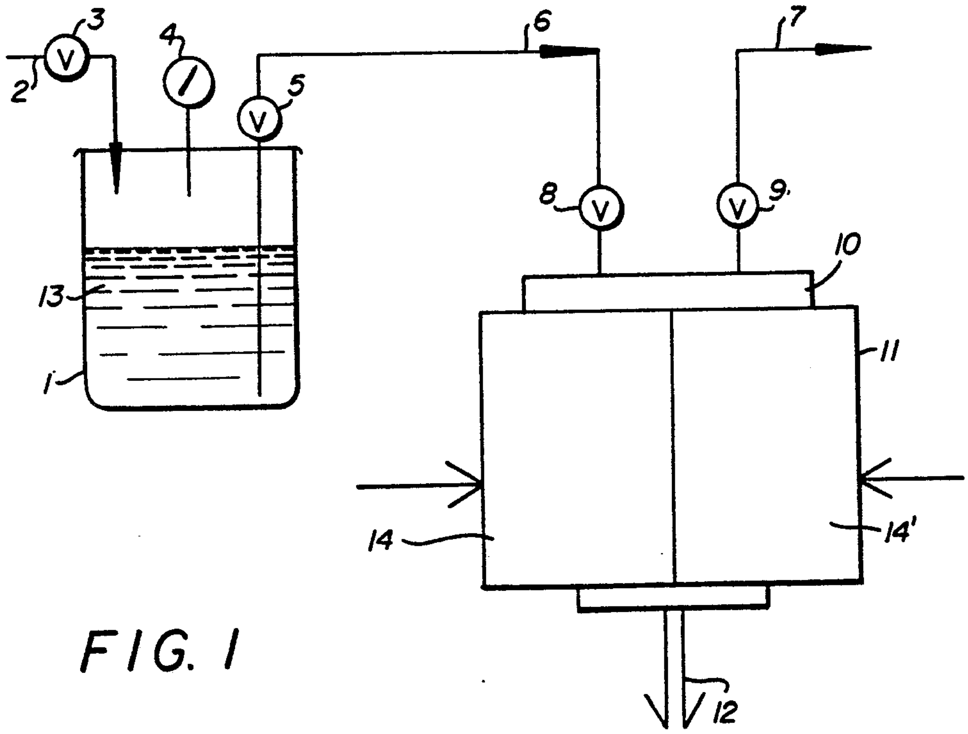


FIG. 1

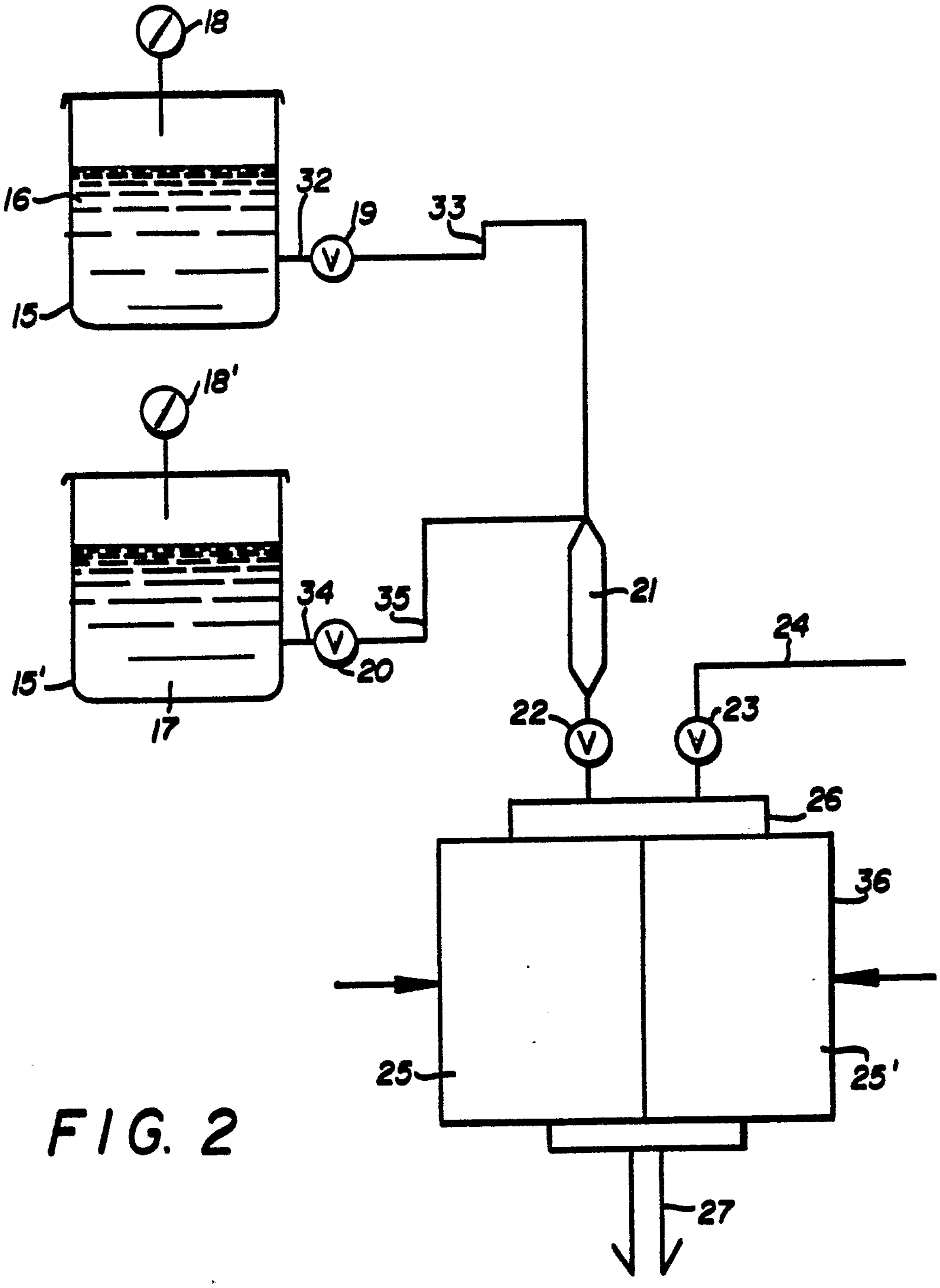


FIG. 2